# EUROPÄISCHE PATENTSCHRIFT

(11) **EP 3 512 391 B1**
(45) Veröffentlichungstag und Bekanntmachung des Hinweises auf die Patenterteilung: **05.08.2020**
(21) Anmeldenummer: 17776934.6
(22) Anmeldetag: 13.09.2017
(51) Int. Cl.: A47J 43/046, A47J 43/07, B02C 18/06, B02C 18/16, F16J 15/16, F16J 15/54, B02C 18/12, B02C 18/24

(54) **VORRICHTUNG ZUM ZERKLEINEM ODER MAHLEN SOWIE EIN VERFAHREN ZUM ABDICHTEN EINER SOLCHER VORRICHTUNG**
DEVICE FOR GRINDING OR MILLING AND METHOD FOR SEALING SUCH A DEVICE
DISPOSITIF DE HACHAGE OU DE BROYAGE AINSI QUE PROCÉDÉ POUR ASSURER L'ÉTANCHÉITÉ D'UN TEL DISPOSITIF

(30) Priorität: 17.09.2016 DE 102016011266
(43) Veröffentlichungstag der Anmeldung: 24.07.2019
(73) Patentinhaber: IKA - Werke GmbH & Co. KG, 79219 Staufen (DE)
(72) Erfinder: KAUFMANN, Axel, 79395 Neuenburg (DE)
(74) Vertreter: Mertzlufft-Paufler, Cornelius
(86) Internationale Anmeldenummer: PCT/EP2017/001084
(87) Internationale Veröffentlichungsnummer: WO 2018/050282

(56) Entgegenhaltungen:
- DE-C- 975 175
- US-A1- 2010 214 867
- US-A1- 2012 228 415

## Beschreibung

Die Erfindung betrifft eine Vorrichtung zum Zerkleinern oder Mahlen von Mahlgut, insbesondere von harten, spröden oder versprödeten Partikeln oder Stoffen, mit einem Behältnis zur Aufnahme des Mahlguts und mit einem in dem Behältnis um eine Rotationsachse drehbaren, mit einer Antriebswelle verbundenen Werkzeug, wobei die Antriebswelle durch eine Durchtrittsöffnung, insbesondere in einem Boden oder einer Wand des Behältnisses, aus dem Behältnis herausgeführt ist, und wobei die Vorrichtung eine Dichtung aufweist, mit der die Durchtrittsöffnung abgedichtet ist.

Ferner betrifft die Erfindung auch ein Verfahren zum Abdichten einer Vorrichtung zum Zerkleinern und/oder Mahlen von Mahlgut, insbesondere einer solchen nach einem der Ansprüche 1 bis 10.

Aus der Druckschrift US 2010/214867 A1 ist eine Vorrichtung der eingangs genannten Art vorbekannt.

Aus der Praxis sind Vorrichtungen der eingangs genannten Art vorbekannt, bei denen die die Durchtrittsöffnung abdichtende Dichtung aus möglichst reibungsarmen Schaumstoffen bestehen. Zu diesem Zweck sind die Dichtungen der vorbekannten Vorrichtungen mit Beschichtungen oder auch mit Beflockungen versehen.

Um die Durchtrittsöffnung für die Antriebswelle in dem Behältnis auch dann noch zufriedenstellend abdichten zu können, wenn Mahlgut mit Hilfe der Vorrichtung besonders fein zerkleinert oder gemahlen werden soll, kann es erforderlich sein, die Antriebswelle und/oder das Werkzeug an das beschichtete und/oder beflockte Schaumstoffmaterial der Dichtung anzupressen. Da sich sowohl die Antriebswelle als auch das Werkzeug relativ zu dem Schaumstoffmaterial der Dichtung bewegen, kann es vorkommen, dass Beschichtung und/oder Beflockung aufgrund der Relativbewegung der Antriebswelle und/oder des Werkzeugs zu der Dichtung von dem Schaumstoffmaterial abgerieben wird und in das Innere des Behältnis gelangt und so zu einer unerwünschten Verunreinigung des Mahlgutes führt.

Aufgabe der Erfindung ist es daher, eine Vorrichtung und ein Verfahren der eingangs genannten Art bereitzustellen, die eine zuverlässige Abdichtung der Durchtrittsöffnung für die Antriebswelle auch bei Erzeugung von besonders feinem Mahlgut erlauben und bei denen die zuvor beschriebenen Nachteile reduziert oder gar vermieden werden können.

Diese Aufgabe wird bei einer Vorrichtung der eingangs genannten Art mit den Mitteln und Merkmalen des auf die Vorrichtung zum Zerkleinern oder Mahlen von Mahlgut gerichteten unabhängigen Anspruchs gelöst. Insbesondere wird zur Lösung der Aufgabe bei einer Vorrichtung der eingangs genannten Art vorgeschlagen, dass die Dichtung einen die Antriebswelle umschließenden Dichtring und einen die Antriebswelle umschließenden Schneidring umfasst, wobei der Dichtring einen ringförmigen Schlitz aufweist, in dem der Schneidring zumindest nach einer Erstinbetriebnahme der Vorrichtung positioniert ist. Auf diese Weise wird eine Dichtung geschaffen, die eine zuverlässige Abdichtung eines von der Antriebswelle in der Durchtrittsöffnung freigelassenen Spalts auch bei fein zerkleinertem oder fein zermahlenem Mahlgut erlaubt.

Dabei ist der Schneidring mit dem Werkzeug und/oder mit der Antriebswelle derart verbunden und wirkt so mit dem Dichtring zusammen, dass die Durchtrittsöffnung abgedichtet ist. Der Schneidring kann dabei zwischen dem Dichtring und dem Werkzeug angeordnet sein.

Um eine das Einschneiden des Dichtrings begünstigende Schnittbewegung zwischen dem Dichtring und dem Schneidring hervorrufen zu können, kann durch Rotation der Antriebswelle eine relative Drehbewegung zwischen dem Dichtring und dem Schneidring erzeugt werden. Um eine Reibung zwischen dem Schneidring und dem Dichtring vermeiden zu können, kann es vorteilhaft sein, wenn der Schneidring eine reibungsreduzierende Beschichtung aufweist.

Zweckmäßig kann es in diesem Zusammenhang sein, wenn der Schneidring dazu drehfest mit dem Werkzeug und/oder mit der Antriebswelle verbunden ist. Der Dichtring kann dann seinerseits ortsfest an dem Behältnis angeordnet sein. Dann ist eine Relativbewegung zwischen dem Schneidring und dem Dichtring möglich Zudem kann der Schneidring entlang einer die Rotationsachse, um die das Werkzeug der Vorrichtung drehbar ist, umgebenden, geschlossenen Verbindungslinie dicht mit dem Werkzeug und/oder mit der Antriebswelle verbunden sein. So kann verhindert werden, dass Mahlgut, auch zerkleinertes oder fein zermahlenes Mahlgut, im Bereich der Verbindungslinie zwischen dem Schneidring und dem Werkzeug beziehungsweise der Antriebswelle durchtritt und aus dem Aufnahmeraum des Behältnisses gelangt. Somit kann der Schneidring also dichtender Bestandteil der Dichtung der Vorrichtung sein.

Bei einer anderen Ausführungsform der Erfindung kann vorgesehen sein, dass der Dichtring drehfest mit dem Werkzeug und/oder mit der Antriebswelle verbunden ist und dass der Schneidring ortsfest an dem Behältnis angeordnet ist. Dabei kann dann der Dichtring entlang einer die Rotationsachse umgebenden, geschlossenen Verbindungslinie dicht mit dem Werkzeug und/oder mit der Antriebswelle verbunden sein.

Dabei kann vorgesehen sein, dass ein Durchmesser des Schneidrings kleiner als ein Außendurchmesser des Dichtrings und größer als ein Innendurchmesser des Dichtrings oder größer als ein Außendurchmesser der Antriebswelle ist.

Die so erzeugte Dichtung kann auch als Labyrinth-Dichtung bezeichnet werden. Eine solche hat den Vorteil, dass eine Kontaktfläche zwischen den Dichtpartnern, nämlich zwischen dem Schneidring und dem Dichtring, durch die Positionierung des Schneidrings innerhalb des ringförmigen Schlitzes und durch eine beidseitige flächige Anlage des Dichtrings an dem Schneidring derart vergrößert ist, dass ein Durchtritt von Mahlgut durch diesen ringförmigen Schlitz vorbei an dem Schneidring erschwert oder gar vollständig verhindert werden kann. Dies kann die Wirksamkeit der Dichtung verbessern.

Besonders zweckmäßig kann es in diesem Zusammenhang sein, wenn der ringförmige Schlitz in dem Dichtring durch ein Drehen des Schneidrings auf einer dem Schneidring zugewandten Oberfläche des Dichtrings oder umgekehrt und durch ein Einschneiden dieser Oberfläche mittels des Schneidrings herstellbar oder hergestellt ist. Auf diese Weise kann der ringförmige Schlitz ohne ein separates Werkzeug, beispielsweise bei einer Montage oder auch einer Erstinbetriebnahme der Vorrichtung in dem Dichtring erzeugt und gleichzeitig der Schneidring in dem ringförmigen Schlitz in dem Dichtring platziert werden. Dies hat den Vorteil, dass ein in Bezug auf den Schneidring, der Teil der Dichtung wird, geometrisch optimal an den Schneidring angepasster ringförmiger Schlitz in dem Dichtring erzeugt werden. Dies ermöglicht es, dass sich der Dichtring mit seinen den ringförmigen Schlitz begrenzenden Flanken eng an den Schneidring anlegt und ein Durchtritt von Mahlgut verhindert werden kann. Zudem kann der Schlitz entsprechend einer Dicke des Schneidrings verhältnismäßig dünn gehalten sein, um die Dichtwirkung zu optimieren.

Um ein zuverlässiges Einschneiden des Dichtrings mit Hilfe des Schneidrings und die Erzeugung des für die Fertigstellung der Dichtung der Vorrichtung erforderlichen ringförmigen Schlitzes in dem Dichtring zu begünstigen, kann eine, beispielsweise die bereits zuvor erwähnte, dem Schneidring zugewandte Oberfläche des Dichtrings mit dem Schneidring aufgrund einer, beispielsweise der bereits zuvor erwähnten, zwischen dem Dichtring und dem Schneidring wirkenden Kraft ringförmig eingedrückt und/oder eingedellt sein. Zudem ist es möglich, dass der Dichtring zumindest vor einer Erstinbetriebnahme der Vorrichtung mit Hilfe des Schneidrings unter einer axialen Vorspannung gehalten ist.

Zur Herstellung des ringförmigen Schlitzes in dem Dichtring mittels des Schneidrings kann es vorteilhaft sein, wenn der Schneidring und der Dichtring, insbesondere dann, wenn die Antriebswelle mit einem Antrieb gekoppelt ist, unter Einwirkung einer in Bezug auf eine, beispielsweise die bereits zuvor erwähnte, dem Schneidring zugewandten Oberfläche des Dichtrings quer oder rechtwinklig orientierten Kraft aneinander gedrückt sind. Auf diese Weise ist es möglich, dass der Schneidring bereits vor einer Erstinbetriebnahme der Vorrichtung, also bevor das Werkzeug und/oder die Antriebswelle zur Erzeugung der Relativbewegung zwischen dem Dichtring und dem Schneidring gedreht werden, bereits mit einer definierten Kraft an der Oberfläche des Dichtrings anliegt und so die Durchtrittsöffnung gegen die Antriebswelle bereits abdichten kann.

Zweckmäßig kann es sein, wenn der Dichtring aus einem nachgiebigen und/oder elastischen Material besteht. Auf diese Weise ist es möglich, dass der Dichtring, beispielsweise unter der zuvor erwähnten quer oder rechtwinklig zu der dem Schneidring zugewandten Oberfläche des Dichtrings orientierten Kraft, zumindest ein Stück weit in das Material des Dichtrings eingedrückt ist. Ein derartiger Dichtring kann sich außerdem einerseits mit einer Ringinnenfläche zuverlässig an die Antriebswelle anlegen und andererseits auch einen zuverlässig dichten Kontakt zwischen seiner Außenringfläche und einer Anlagefläche für den Dichtring herstellen.

Zudem begünstigt diese quer oder rechtwinklig zu der Oberfläche des Dichtrings orientierte Kraft ein Einschneiden des Schneidrings in das Material des Dichtrings, sobald die Relativbewegung zwischen dem vorzugsweise stillstehenden Dichtring und dem vorzugsweise mitdrehenden Schneidring mit der Antriebswelle und/oder dem Werkzeug erzeugt wird. Auch kann diese Kraft dafür verantwortlich sein, dass der Schneidring nach Herstellung des ringförmigen Schlitzes in diesen positioniert werden kann. Dies kann entweder dadurch geschehen, dass der Schneidring in den ringförmigen Schlitz in dem Dichtring eintaucht beziehungsweise dass der Dichtring sich nach Einschneiden des ringförmigen Schlitzes mit Hilfe des Schneidringes derart entspannt, dass sich der Dichtring um den Schneidring herum an diesen anlegt, sodass der Schneidring letztendlich wiederum in dem ringförmigen Schlitz positioniert ist.

Vorteilhaft kann es sein, wenn der Dichtring aus einem Schaumstoff, insbesondere aus PE-Schaum besteht. Die Verwendung von PE-Schaum als Material für den Dichtring kann insbesondere Nutzung der erfindungsgemäßen Vorrichtung zur Verarbeitung von Lebensmitteln vorteilhaft sein. PE-Schäume können die in diesem Zusammenhang gestellten Anforderungen erfüllen und für die Verwendung bei der Verarbeitung von Nahrungsmitteln zugelassen sein. Außerdem hat es sich herausgestellt, dass PE-Schaum vergleichsweise leicht geschnitten werden kann, weswegen die Verwendung von PE-Schaum als Material für den Dichtring im Zusammenhang mit dem Schneidring der Vorrichtung vorteilhaft sein kann.

Besonders vorteilhaft kann es sein, wenn der Dichtring aus einem geschlossenporigen PE-Schaum besteht. So ist es möglich, dass beim Einschneiden des Materials des Dichtrings mithilfe des Schneidrings abgetrennte Materialpartikel des Dichtrings von den geöffneten Poren oder Zellen des geschlossenporigen Schaums aufgenommen werden und dort verbleiben. Auf diese Weise kann eine Kontamination eines Aufnahmeraums des Behältnisses und des darin angeordneten Mahlgutes mit Partikeln des Dichtungsringes verringert oder gar vollständig vermieden werden.

Da der Schneidring neben seiner Schneidfunktion auch eine Dichtfunktion hat, kann es besonders vorteilhaft sein, wenn der Schneidring aus einem Metall oder einer Legierung davon besteht. Zudem kann vorgesehen sein, dass der Schneidring eine dem Dichtring in Gebrauchsstellung zugewandte Schneidkante aufweist. Diese Schneidkante kann beispielsweise eine gerade oder eine gezahnte Schneidkante sein. Auf diese Weise kann ein Einschneiden der Oberfläche des Dichtrings mit Hilfe des Schneidrings noch leichter erfolgen.

Um den Dichtring zuverlässig in seiner gewünschten Position im Bereich der Durchtrittsöffnung halten zu können, kann es vorteilhaft sein, wenn die Vorrichtung eine Dichtringaufnahme aufweist, in der der Dichtring, vorzugsweise ortsfest, also nicht mit der Antriebswelle mitdrehend, sondern relativ zu dieser stillstehend, positioniert ist. Dabei kann die Dichtringaufnahme napfförmig ausgebildet sein. Zudem ist es möglich, dass eine axiale Ausdehnung oder Höhe des Dichtrings größer als eine Tiefe der Dichtringaufnahme ist, also dass der Dichtring über einen Rand der Dichtringaufnahme übersteht, wenn er in der Dichtringaufnahme positioniert ist.

Zur Erzeugung der bereits zuvor beschriebenen Vorspannung des Dichtrings kann es vorteilhaft, sein, wenn eine Distanz zwischen dem Schneidring und einer quer oder rechtwinklig zur Rotationsachse des Werkzeugs orientierten Grundfläche einer, beispielsweise in der bereits vorerwähnten Dichtringaufnahme kleiner als eine Höhe oder axiale Abmessung des Dichtrings ist. Auf diese Weise ist sichergestellt, dass der Schneidring, insbesondere mit seiner Schneidkante, mit einer vorbestimmten Kraft an den Dichtring angepresst wird, so dass bei einer Drehung des Schneidrings relativ zu dem feststehenden Dichtring ein Einschneiden des Dichtrings mit Hilfe des Schneidrings erfolgen kann.

Es sei erwähnt, dass die Vorrichtung eine solche Vorrichtung sein kann, die auf eine bestehende Antriebseinheit mit einem Antrieb aufgesetzt wird. Dazu kann die Antriebswelle der Vorrichtung mit einem Antrieb einer separaten Antriebseinheit für das Werkzeug koppelbar und in Gebrauchsstellung gekoppelt sein. Um die Vorrichtung an mit einer solchen Antriebseinheit verbinden zu können, kann die Vorrichtung an ihrer in Gebrauchsstellung einer Antriebseinheit zugewandten Seite eine Bajonettkupplung aufweisen. Mit dieser Bajonettkupplung kann die Vorrichtung dann an eine Antriebseinheit, die mit einem entsprechenden Gegenkupplungsstück versehen ist, angesetzt und mit dieser verbunden werden. Es ist aber auch möglich, dass die Vorrichtung einen eigenen Antrieb umfasst, mit dem die Antriebswelle koppelbar oder gekoppelt ist.

Die eingangs genannte Aufgabe wird auch durch ein Verfahren zum Abdichten einer Vorrichtung zum Zerkleinern und/oder Mahlen von Mahlgut, insbesondere einer solchen nach einem der Ansprüche 1 bis 10, mit den Mittel und Merkmalen des auf das Verfahren zum Abdichten gerichteten unabhängigen Anspruchs und insbesondere dadurch gelöst, dass ein Dichtring der Vorrichtung zur Erzeugung eines ringförmigen Schlitzes in den Dichtring mittels eines Schneidrings der Vorrichtung eingeschnitten wird, wonach der Schneidring zur Herstellung der Dichtung in dem ringförmigen Schlitz positioniert wird.

Zweckmäßig kann es sein, wenn der ringförmige Schlitz mittels einer Drehbewegung des Schneidrings auf einer dem Schneidring zugewandten Oberfläche des Dichtrings unter gleichzeitiger Aufbringung einer quer oder rechtwinklig zu der Oberfläche ausgerichteten, zwischen dem Schneidring und dem Dichtring wirkenden Kraft in den Dichtring eingeschnitten und der Dichtring aufgrund dieser Kraft in den Schlitz und/oder der Dichtring um den Schneidring positioniert wird.

Dabei kann vorgesehen sein, dass eine Antriebswelle der Vorrichtung eine relative Drehbewegung zwischen dem Dichtring und dem Schneidring erzeugt und gleichzeitig eine quer oder rechtwinklig zu einer dem Schneidring zugewandten Oberfläche des Dichtrings orientierte Kraft auf den Dichtungsring und/oder den Schneidring aufgebracht wird. Dadurch kann der Schneidring in den Dichtring einschneiden, dabei den ringförmigen Schlitz erzeugen und danach in dem ringförmigen Schlitz positioniert werden.

Dabei kann vorgesehen sein, dass der Dichtring mittels des Schneidrings zur Bereitstellung der Kraft vorgespannt gehalten wird. Es ist aber auch möglich, dass die Kraft durch eine Verbindung einer Antriebswelle eines Werkzeugs der Vorrichtung mit einem Antrieb erzeugt wird.

In beiden Fällen ist es möglich, dass das Material des Dichtrings bei einer Drehung des Schneidrings relativ zu der Oberfläche des Dichtrings zerschnitten wird, der Schneidring nach und nach tiefer in das Material des Dichtrings eindringt und schließlich dann den ringförmigen Schlitz in dem Material des Dichtrings erzeugt.

Nachfolgend ist ein Ausführungsbeispiel der Erfindung anhand der Zeichnung näher beschrieben. Es zeigen in zum Teil schematisierter Darstellung:
- Fig. 1: eine Seitenansicht einer erfindungsgemäßen Vorrichtung zum Zerkleinern oder Mahlen von Mahlgut,
- Fig. 2: eine Draufsicht auf einen Boden eines Aufnahmeraums eines Behältnisses zur Aufnahme von Mahlgut der in Figur 1 dargestellten Vorrichtung,
- Fig. 3: eine entlang der in Figur 1 mit III bis III markierten Linie geschnittenen Seitenansicht der in den Figuren 1 und 2 dargestellten Vorrichtung vor einer Erstinbetriebnahme, wobei zu erkennen ist, dass ein unterhalb des Werkzeugs der Vorrichtung an einer Antriebswelle der Vorrichtung drehfest angeordneter Schneidring axial in einen unterhalb des Schneidrings angeordneten Dichtring eingepresst ist,
- Fig. 4: die in Figur 3 mit dem mit Kreis K1 markierte Einzelheit in vergrößerter Darstellung,
- Fig. 5: eine weitere geschnittene Seitenansicht der in den vorherigen Figuren dargestellten Vorrichtung, wobei nun zu erkennen ist, dass der Schneidring durch Drehen des Schneidrings entlang einer dem Schneidring zugewandten Oberfläche des Dichtrings in diesen Dichtring einen ringförmigen Schlitz eingeschnitten hat, und dass der Schneidring zur Vervollständigung der Dichtung in dem Schlitz positioniert ist, sowie
- Fig. 6: die in Figur 5 mit dem Kreis K2 markierte Einzelheit in vergrößerter Darstellung.

Eine im Ganzen mit 1 bezeichnete Vorrichtung dient zum Zerkleinern oder Mahlen von Mahlgut, beispielsweise von harten, spröden oder versprödeten Partikeln und Stoffen.

Zu der Vorrichtung gehört ein Behältnis 2, das zur Aufnahme des Mahlgutes dient. Das Behältnis 2 ist insbesondere gemäß den Schnittdarstellungen der Vorrichtung 1 aus einem Unterteil 1 und einem damit verbindbaren oder verbundenen haubenförmigen Deckel 4 in Gebrauchsstellung zusammengesetzt.

In dem Behältnis 2 ist ein während des Zerkleinerns oder Mahlens des Mahlgutes rotierendes Werkzeug 5 angeordnet, dass drehfest mit einer Antriebswelle 6 der Vorrichtung 1 verbunden ist.

Die Antriebswelle 6 ist durch eine Durchtrittsöffnung 7 in einem Boden 8 des Unterteils 3 des Behältnisses 2 aus dem Behältnis 2 herausgeführt und mit einem in den Figuren nur stark schematisierten Antrieb 9 für das Werkzeug 5 koppelbar und in Gebrauchsstellung der Vorrichtung 1 mit diesem gekoppelt. Um einen Austritt von Mahlgut durch die Durchtrittsöffnung 7 für die Antriebswelle 6 zu verhindern, weist die Vorrichtung 1 eine Dichtung 10 auf. Mit dieser Dichtung 10 ist die Durchtrittsöffnung 7 zumindest bei Gebrauch der Vorrichtung 1 abgedichtet.

Die Dichtung 10 umfasst dabei einen die Antriebswelle 6 umschließenden Dichtring 11 und einen zwischen dem Dichtring 11 und dem Werkzeug 5 angeordneten, die Antriebswelle 6 ebenfalls umschließenden Schneidring 12. Der Schneidring 12 ist dabei mit der Antriebswelle derart verbunden und wirkt mit dem Dichtring 11 so zusammen, dass die Durchtrittsöffnung 7 abgedichtet ist.

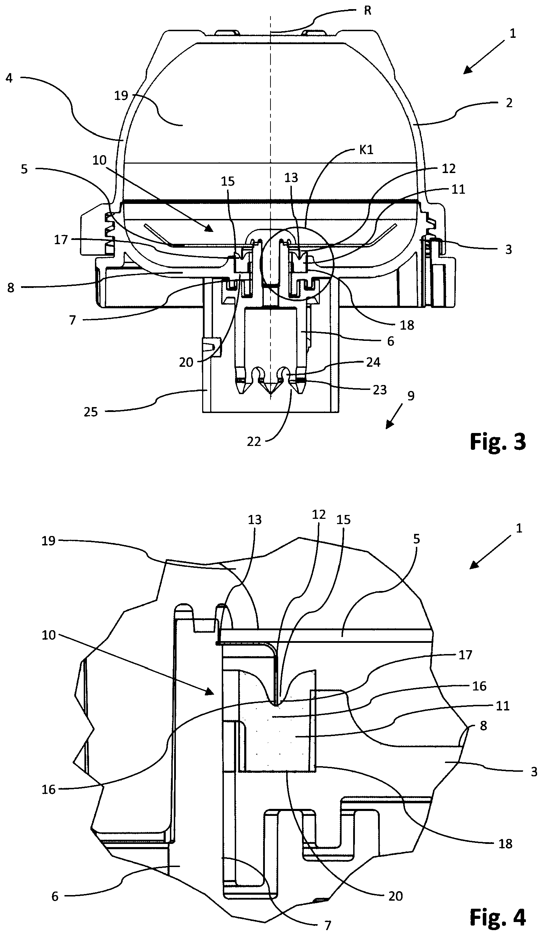

Die Figuren 3 und 4 zeigen die Vorrichtung 1 vor ihrer Erstinbetriebnahme. Hier ist der Schneidring 12 an den Dichtring 11 lediglich angepresst, nicht jedoch bereits in diesen eingeschnitten.

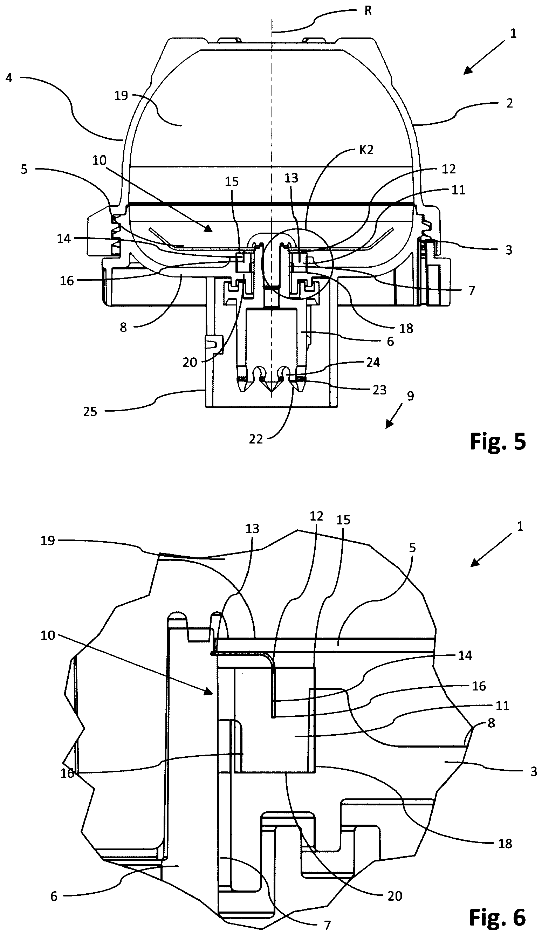

Die Figuren 5 und 6 zeigen die Vorrichtung 1 nach einer Erstinbetriebnahme der Vorrichtung 1. Dabei ist zu erkennen ist, dass der Schneidring 12 in den Dichtring 11 eingeschnitten ist. Erstinbetriebnahme in diesem Zusammenhang bedeutet, dass Schneidring 12 zumindest einen Teil einer vollen Umdrehung um die Rotationsachse R ausführt hat, um in den Dichtungsring 12 einzuschneiden.

Der Schneidring 12 ist dabei drehfest mit dem Werkzeug 5 und mit der Antriebswelle 6 verbunden, so dass also keine Relativbewegung zwischen dem Schneidring 12 und dem Werkzeug 5 und der Antriebswelle 6 stattfindet, eine relative Drehbewegung zwischen dem Dichtring 11 und dem Schneidring 12 durch Drehen des Schneidrings 12 aber erzeugt werden kann.

Diese relative Drehbewegung zwischen dem Dichtring 11 und dem Schneidring 12 wird durch Rotation der Antriebswelle 6 erzeugt.

Der Schneidring 12 ist entlang einer die Rotationsachse R des Werkzeugs 5 umgebenden, vollständig geschlossenen Verbindungslinie 13 dicht mit dem Werkzeug 5 und mit der Antriebswelle 6 verbunden. So wird ein Durchtritt von zerkleinertem Mahlgut zwischen dem Schneidring 12 und dem Werkzeug 5 und/oder der Antriebswelle 6 entlang der Verbindungslinie 13 unterbunden.

Anhand der Figuren 5 und 6 wird deutlich, dass der Dichtring 12 nach einer Montage oder Erstinbetriebnahme der Vorrichtung 1 einen dem Schneidring 12 zugewandten ringförmigen Schlitz 14 aufweist, in dem der Schneidring positioniert ist.

Dieser ringförmige Schlitz 14 in dem Dichtring 11 wird dabei durch ein Drehen des Schneidrings 12 auf einer dem Schneidring 12 zugewandten Oberfläche 15 des Dichtrings 11 und durch ein Einschneiden dieser Oberfläche 15 mittels des Schneidrings 12 hergestellt.

Die beiden Figuren 3 und 4, die die Vorrichtung 1 vor der Erstinbetriebnahme zeigen, verdeutlichen, dass der Schneidring 12 und der Dichtring 11 unter Einwirkung einer in Bezug auf die dem Schneidring 12 zugewandten Oberfläche 15 des Dichtrings 11 quer oder rechtwinklig orientierten Kraft aneinander gedrückt sind. Dies ist gut an der V-förmigen Einbuchtung 17 der Oberfläche 15 des Dichtrings 11 zu erkennen, die durch den an diese Oberfläche 15 angepressten Schneidring 12 hervorgerufen wird.

Diese V-förmige Einbuchtung 17 ist möglich, da der Dichtring 11 aus einem nachgiebigen und elastischen Material hergestellt ist. Bei diesem Material handelt es sich um einen geschlossenporigen PE-Schaum. Da der Schneidring 12 aus einem härteren Material besteht als der Dichtring 11, nämlich beispielsweise aus einem Metall oder einer Legierung davon, ist es möglich, dass der Dichtring 11 in der in den Figuren 3 und 4 gezeigten Art und Weise mit Hilfe des Schneidrings 12 vor einer Erstinbetriebnahme der Vorrichtung 1 eingedrückt werden kann.

Zur Erzeugung des ringförmigen Schlitzes 14 in dem Dichtring 11 weist der Schneidring 12 eine dem Dichtring 11 zugewandte Schneidkante 16 auf. Bei dem in den Figuren dargestellten Schneidring 12 ist diese Schneidkante 16 eine gerade Schneidkante. Bei einem in den Figuren nicht dargestellten Ausführungsbeispiel der erfindungsgemäßen Vorrichtung weist die Schneidkante 16 des Schneidrings 12 eine Zahnung mit mehreren Schneidzähnen auf, es handelt sich hierbei also um eine gezahnte Schneidkante.

Gemäß den Figuren 3 und 4 ist die dem Schneidring 12 zugewandte Oberfläche 15 des Dichtrings 11 vor Erstinbetriebnahme, also vor einer ersten Drehung des Schneidrings 12 auf dieser Oberfläche 15, aufgrund des Schneidrings 12 und der zwischen dem Dichtring 11 und dem Schneidring 12 wirkenden Kraft zunächst ringförmig eingedrückt beziehungsweise eingedellt. Auf diese Weise entsteht die in den Figuren 3 und 4 gut zuerkennende V-förmige Einbuchtung 17 in der Oberfläche 15 des Dichtrings 11. Diese V-förmige Einbuchtung 17 verläuft dabei ringförmig um die Rotationsachse R des Werkzeugs 5 und der Antriebswelle 6.

Damit ist der Dichtring 11 mit Hilfe des Schneidrings 12 unter einer axialen Vorspannung an dem Unterteil 3 des Behältnisses 2 gehalten.

Die Vorrichtung 1 und hier das Unterteil 3 des Behältnisses 2 weist eine napfförmige Dichtringaufnahme 18 auf. Diese ist einem Aufnahmeraum 19 des Behältnisses 2 zugewandt. In der Dichtringaufnahme 18 ist der Dichtring 11 positioniert und wird dort an Ort und Stelle gehalten. Insbesondere die Schnittdarstellungen gemäß den Figuren 3 bis 6 der Vorrichtung 1 verdeutlichen, dass ein Durchmesser der Dichtringaufnahme 18 größer als ein Durchmesser des Schneidrings 11 ist. Ferner ist ein Durchmesser des Schneidrings 12 zwar größer als ein Innendurchmesser des Dichtrings 11 und auch größer als ein Außendurchmesser der Antriebswelle 6, jedoch kleiner als ein Außendurchmesser des Dichtrings 11.

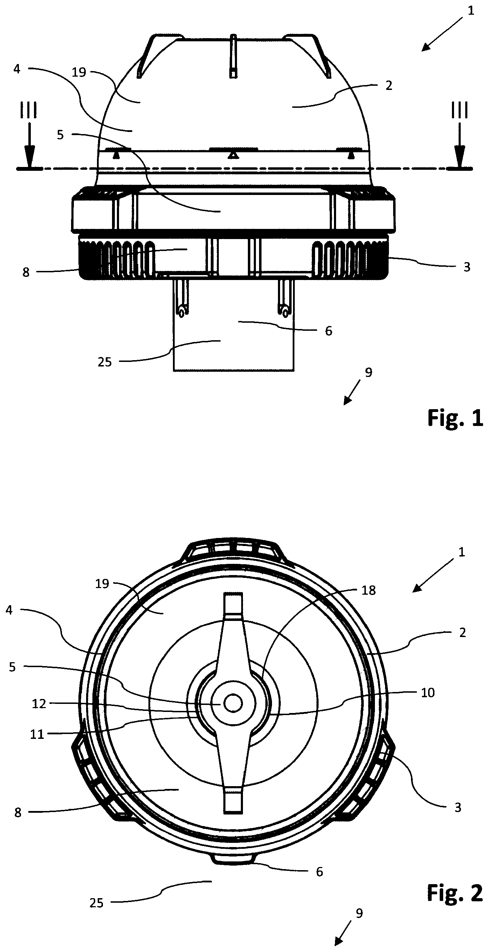

Die Figuren 3 bis 6 zeigen ferner, dass eine Distanz zwischen dem Schneidring 12 beziehungsweise zwischen der Schneidkante 16 des Schneidrings 12 und einer quer oder rechtwinklig zur Rotationsachse R des Werkzeugs und der Antriebswelle 6 orientierten Grundfläche 20 der Dichtringaufnahme 18 kleiner als eine Höhe oder axiale Abmessung des Dichtrings 11 ist. Auf diese Weise wird der Dichtring 11 mit Hilfe des Schneidrings 12 aufgrund der zuvor beschriebenen Abmessungen zwischen dem Schneidring 12 und der Grundfläche 20 eingeklemmt und so unter einer Vorspannung gehalten. Diese Vorspannung begünstigt ein Einschneiden des Dichtrings 11 mit Hilfe des Schneidrings 12 bei Inbetriebnahme der Vorrichtung 1 durch Rotation des Werkzeugs 5, der Antriebswelle 6 und des Schneidrings 12 relativ zu dem Dichtring 11. Das Ausführungsbeispiel der erfindungsgemäßen Vorrichtung 1, wie es in den Figuren 1 bis 6 dargestellt ist, ist mit dem separaten Antrieb 9 einer in den Figuren nicht dargestellten Antriebseinheit verbindbar. Dazu weist die Vorrichtung 1 an ihrer in Gebrauchsstellung der Antriebseinheit zugewandten Seite eine Bajonettkupplung 25 aufweisen, mit der sie mit der Antriebseinheit verbunden werden kann. Dabei wird die Antriebswelle 6 der Vorrichtung 1 mit dem Antrieb 9 gekoppelt.

Dazu weist die Antriebswelle 6 an ihrem dem Werkzeug 5 abgewandten Ende einen Kupplungsfortsatz 21 auf, der mit einem entsprechend ausgebildeten Gegenkupplungsstück des Antriebs 9 zur Übertragung eines Drehmoments von dem Antrieb 9 auf die Antriebswelle 6 verbunden werden kann.

Bei einem nicht in den Figuren dargestellten Ausführungsbeispiel der erfindungsgemäßen Vorrichtung 1 ist vorgesehen, dass die Vorrichtung 1 selbst einen Antrieb 9 umfasst, mit dem die Antriebswelle koppelbar oder gekoppelt ist. Dabei kann vorgesehen sein, dass der Antrieb 9 und die übrigen Elemente der Vorrichtung 1 in einem gemeinsamen Gehäuse angeordnet sind und bei bestimmungsgemäßen Gebrauch nicht voneinander getrennt werden können.

Die Herstellung der Dichtung 10 der Vorrichtung 1 sowie sie in den Figuren 1 bis 6 dargestellt ist, kann nach dem nachfolgend beschriebenen Verfahren erfolgen. Hierbei wird der Dichtring 11 der Vorrichtung 1 zur Erzeugung des ringförmigen Schlitzes 14 in dem Dichtring 11 mittels des Schneidrings 12 der Vorrichtung 1 eingeschnitten. Danach wird der Schneidring 12 zur Herstellung der Dichtung 10 in dem ringförmigen Schlitz 14 positioniert. Auf diese Weise kann aus dem Dichtring 11 und dem Schneidring 12 eine Labyrinthdichtung erzeugt werden, bei der ein Durchtritt von fein zermahlenem Mahlgut erschwert oder sogar vollständig verhindert ist.

Der ringförmige Schlitz 14 wird dabei mittels einer Drehbewegung des Schneidrings 12 auf der dem Schneidring 12 zugewandten Oberfläche 15 des Dichtrings 11 unter gleichzeitiger Aufbringung einer quer der rechtwinklig zu der Oberfläche 15 ausgerichteten, zwischen dem Schneidring 12 und dem Dichtring 11 wirkenden Kraft in den Dichtring 11 eingeschnitten. Die relative Drehbewegung wird dabei durch eine Rotation der Antriebswelle 6 erzeugt.

Aufgrund dieser Kraft wird dann der Schneidring 12 in dem Schlitz 14 und der Dichtring 11 um den Schneidring 12 positioniert. Der Dichtring 11 wird mittels des Schneidrings 12 zur Bereitstellung der Kraft vorgespannt gehalten. Dabei kann die Kraft durch eine Verbindung der Antriebswelle 6 des Werkzeugs 5 der Vorrichtung 1 mit dem Antrieb 9 erzeugt oder auch verstärkt werden.

Zu diesem Zweck weist der Kupplungsfortsatz 21 Einlaufschrägen 22 auf, die in Engstellen 23 übergehen, an die sich Hinterschneidungen 24 anschließen. Wird der Kupplungsfortsatz 21 mit einem entsprechend ausgebildeten Gegenkupplungsstück des Antriebs 9 verbunden passieren passend zu den Einlaufschrägen 22, den Engstellen 23 und den Hinterschneidungen 24 ausgebildete Fortsätze des Gegenkupplungsstück die Engstellen 23 und rutschen dann gemäß der Gestalt der Hinterschneidungen 24 axial tiefer in diese hinein. Um diese Bewegung zu ermöglichen, wird die Antriebswelle 6 in Richtung des Gegenkupplungsstücks auf dieses aufgedrückt. Dabei wird die Antriebswelle 6 gemeinsam mit dem drehfest mit dieser verbundenen Schneidring 12 in Richtung des Antriebs 9 und in Richtung des in der Dichtringaufnahme 18 positionierten Dichtrings 11 bewegt.

Diese axiale Bewegung begünstigt schließlich die Erzeugung des ringförmigen Schlitzes 14 in dem Dichtring 11 bei einer Rotation des Schneidrings 12 relativ zu dem Dichtring 11 und die Positionierung des Schneidrings 12 in diesem ringförmigen Schlitz 14 innerhalb des Dichtrings 11.

Zur Verbesserung der Abdichtung einer Vorrichtung zum Zerkleinern oder Mahlen von Mahlgut werden die erfindungsgemäße Vorrichtung 1 und das Verfahren zum Abdichten insbesondere einer derartigen Vorrichtung 1 vorgeschlagen. Dabei ist vorgesehen, dass die Dichtung 10 der Vorrichtung 1 den die Antriebswelle 6 radial umschließenden Dichtring 11 und den zwischen dem Dichtring 11 und dem Werkzeug 5 angeordneten Schneidring 12 umfasst. Zur Fertigstellung der Dichtung oder zur Erzeugung der Dichtwirkung ist der Schneidring 12 in den Dichtring 11 eingeschnitten und in dem dabei entstandenen ringförmigen Schlitz 14 positioniert und derart mit dem Werkzeug 5 und/oder mit der Antriebswelle 6 verbunden, dass die Durchtrittsöffnung 7 abgedichtet ist.

### Bezugszeichenliste

- 1: Vorrichtung
- 2: Behältnis
- 3: Unterteil
- 4: Deckel
- 5: Werkzeug
- 6: Antriebswelle
- 7: Durchtrittsöffnung
- 8: Boden
- 9: Antrieb
- 10: Dichtung
- 11: Dichtring
- 12: Schneidring
- 13: Verbindungslinie
- 14: ringförmiger Schlitz
- 15: Oberfläche von 11
- 16: Schneidkante
- 17: V-förmige Einbuchtung
- 18: Dichtringaufnahme
- 19: Aufnahmeraum in 2
- 20: Grundfläche von 18
- 21: Kupplungsfortsatz
- 22: Einlaufschräge
- 23: Engstelle
- 24: Hinterscheidung
- 25: Bajonettkupplung
- R: Rotationsachse

## Patentansprüche

1. Vorrichtung (1) zum Zerkleinern oder Mahlen von Mahlgut mit einem Behältnis (2) zur Auf¬nah¬me des Mahlgutes und mit einem in dem Behältnis (2) um eine Rotationsachse (R) drehbaren, mit einer Antriebswelle (6) verbundenen Werk¬zeug (5), wobei die Antriebswelle (6) durch eine Durchtrittsöffnung (7) in einem Boden (8) oder einer Wand des Behältnisses (2) aus dem Behältnis (2) herausgeführt ist, und wobei die Vorrichtung (1) eine Dichtung (10) aufweist, mit der die Durchtrittsöffnung (7) abgedichtet ist, **dadurch gekennzeichnet, dass** die Dichtung (10) einen die Antriebswelle (6) umschließenden Dichtring (11) und einen die Antriebswelle (6) umschließenden Schneidring (12) umfasst, wobei der Dichtring (11) einen mit dem Schneidring (12) in den Dichtring (12) eingeschnittenen ringförmigen Schlitz (14) aufweist, in dem der Schneidring (12) zumindest nach einer Erstinbetriebnahme der Vorrichtung (1) positioniert ist.

2. Vorrichtung (1) nach Anspruch 1, **dadurch gekennzeichnet, dass** durch eine Rotation der Antriebswelle (6) eine relative Drehbewegung zwischen dem Dichtring (11) und dem Schneidring (12) erzeugbar ist und/oder dass der Schneidring (12) eine reibungsreduzierende Beschichtung aufweist.

3. Vorrichtung (1) nach Anspruch 1 oder 2, **dadurch gekennzeichnet, dass** der Schneidring (12) drehfest mit dem Werkzeug (5) und/oder mit der Antriebswelle (6) verbunden ist und dass der Dichtring (11) ortsfest an dem Behältnis (2) angeordnet ist und/oder dass der Schneidring (12) entlang einer die Rotationsachse (R) umgebenden, geschlossenen Verbindungslinie (13) dicht mit dem Werkzeug (5) und/oder mit der Antriebswelle (6) verbunden ist, oder dass der Dichtring (11) drehfest mit dem Werkzeug (5) und/oder mit der Antriebswelle (6) verbunden ist und dass der Schneidring (12) ortsfest an dem Behältnis (2) angeordnet ist, wobei der Dichtring (11) entlang einer die Rotationsachse (R) umgebenden, geschlossenen Verbindungslinie (13) dicht mit dem Werkzeug (5) und/oder mit der Antriebswelle (6) verbunden ist.

4. Vorrichtung (1) nach einem der Ansprüche 1 bis 3, **dadurch gekennzeichnet, dass** ein Durchmesser des Schneidrings (12) kleiner als ein Außendurchmesser des Dichtrings (11) und größer als ein Innendurchmesser des Dichtrings (11) oder größer als ein Außendurchmesser der Antriebswelle (6) ist.

5. Vorrichtung (1) nach einem der Ansprüche 1 bis 4, **dadurch gekennzeichnet, dass** der ringförmige Schlitz (14) in dem Dichtring (11) durch ein Drehen des Schneidrings (12) auf einer dem Schneidring (12) zugewandten Oberfläche (15) des Dichtrings (11) oder umgekehrt und durch ein Einschneiden dieser Oberfläche (15) mittels des Schneidrings (12) herstellbar oder hergestellt ist.

6. Vorrichtung (1) nach einem der Ansprüche 1 bis 5, **dadurch gekennzeichnet, dass** der Schneidring (12) und der Dichtring (11), insbesondere dann, wenn die Antriebswelle (6) mit einem Antrieb (9) gekoppelt ist, unter Einwirkung einer in Bezug auf eine oder die dem Schneidring (12) zugewandten Oberfläche (15) des Dichtrings (11) quer oder rechtwinklig orientierten Kraft aneinander gedrückt sind und/oder dass der Dichtring (11) mithilfe des Schneidrings (12) zumindest vor einer Erstinbetriebnahme der Vorrichtung (1) unter einer axialen Vorspannung gehalten ist.

7. Vorrichtung (1) nach einem der vorhergehenden Ansprüche, **dadurch gekennzeichnet, dass** der Dichtring (11) aus einem nachgiebigen und/oder elastischen Material und/oder aus einem Schaumstoff, insbesondere aus PE-Schaum, vorzugsweise aus einem geschlossenporigen PE-Schaum, besteht und/oder dass der Schneidring (12) aus einem Metall oder einer Legierung davon besteht und/oder eine dem Dichtring (11) zugewandte, insbesondere gerade oder gezahnte, Schneidkante (16) aufweist.

8. Vorrichtung (1) nach einem der vorhergehenden Ansprüche, **dadurch gekennzeichnet, dass** die Vorrichtung (1) eine, vorzugsweise napfförmige, Dichtringaufnahme (18) aufweist, in der der Dichtring (11) drehfest positioniert ist, insbesondere wobei ein Durchmesser der Dichtringaufnahme (18) größer als ein Durchmesser des Schneidrings (12) ist.

9. Vorrichtung (1) nach einem der vorhergehenden Ansprüche, **dadurch gekennzeichnet, dass** eine Distanz zwischen dem Schneidring (12) und einer quer oder rechtwinklig zur Rotationsachse (R) des Werkzeugs (5) orientierten Grundfläche (20) einer oder der Dichtringaufnahme (18) kleiner als eine Höhe oder axiale Abmessung des Dichtrings (11) ist.

10. Vorrichtung (1) nach einem der vorhergehenden Ansprüche, **dadurch gekennzeichnet, dass** die Antriebswelle (6) mit einem Antrieb (9) für das Werkzeug (5) koppelbar und in Gebrauchsstellung gekoppelt ist und/oder dass die Vorrichtung (1) einen Antrieb (9) umfasst, mit dem die Antriebswelle (6) koppelbar oder gekoppelt ist.

11. Verfahren zum Abdichten einer Vorrichtung (1) zum Zerkleinern und/oder Mahlen von Mahlgut, insbesondere einer solchen nach einem der Ansprüche 1 bis 10, **dadurch gekennzeichnet, dass** ein Dichtring (11) der Vorrichtung (1) zur Erzeugung eines ringförmigen Schlitzes (14) in dem Dichtring (11) mittels eines Schneidrings (12) der Vorrichtung (1) eingeschnitten wird, wonach der Schneidring (12) zur Herstellung der Dichtung (10) in dem ringförmigen Schlitz (14) positioniert wird.

12. Verfahren nach Anspruch 11, **dadurch gekennzeichnet, dass** eine Rotation einer Antriebswelle (6) der Vorrichtung (1) eine relative Drehbewegung zwischen dem Dichtring (11) und dem Schneidring (12) erzeugt und gleichzeitig eine quer oder rechtwinklig zu einer dem Schneidring (12) zugewandten Oberfläche (15) des Dichtrings (11) orientierte Kraft auf den Dichtungsring (11) und/oder den Schneidring (12) aufgebracht wird, wodurch der Schneidring (12) in den Dichtring (11) einschneidet, dabei den ringförmigen Schlitz (14) erzeugt und danach in dem ringförmigen Schlitz (14) positioniert wird.

13. Verfahren nach Anspruch 12, **dadurch gekennzeichnet, dass** der Dichtring (11) mittels des Schneidrings (12) zur Bereitstellung der Kraft vorgespannt gehalten wird und/oder dass die Kraft durch eine Verbindung einer Antriebswelle (6) eines Werkzeugs (5) der Vorrichtung (1) mit einem Antrieb (9) erzeugt wird.

## Claims

1. Device (1) for grinding or milling grinding product, comprising a container (2) for receiving the grinding product, and comprising a tool (5) which is rotatable in the container (2) about an axis of rotation (R) and is connected to a drive shaft (6), wherein the drive shaft (6) is led out of the container (2) through a passage opening (7) in a base (8) or a wall of the container (2), and wherein the device (1) has a seal (10) with which the passage opening (7) is sealed, **characterized in that** the seal (10) comprises a sealing ring (11) surrounding the drive shaft (6) and a cutting ring (12) surrounding the drive shaft (6), wherein the sealing ring (11) has an annular slot (14) which is cut into the sealing ring (12) with the cutting ring (12) and in which the cutting ring (12) is positioned at least after initial commissioning of the device (1).

2. Device (1) according to Claim 1, **characterized in that** a relative rotational movement between the sealing ring (11) and the cutting ring (12) can be produced by rotation of the drive shaft (6), and/or **in that** the cutting ring (12) has a friction-reducing coating.

3. Device (1) according to Claim 1 or 2, **characterized in that** the cutting ring (12) is connected to the tool (5) and/or to the drive shaft (6) for rotation therewith, and **in that** the sealing ring (11) is arranged in a positionally fixed manner on the container (2), and/or **in that** the cutting ring (12) is connected tightly to the tool (5) and/or to the drive shaft (6) along a closed connecting line (13) surrounding the axis of rotation (R), or **in that** the sealing ring (11) is connected to the tool (5) and/or to the drive shaft (6) for rotation therewith, and **in that** the cutting ring (12) is arranged in a positionally fixed manner on the container (2), wherein the sealing ring (11) is connected tightly to the tool (5) and/or to the drive shaft (6) along a closed connecting line (13) surrounding the axis of rotation (R).

4. Device (1) according to one of Claims 1 to 3, **characterized in that** a diameter of the cutting ring (12) is smaller than an outer diameter of the sealing ring (11) and larger than an inner diameter of the sealing ring (11) or larger than an outer diameter of the drive shaft (6).

5. Device (1) according to one of Claims 1 to 4, **characterized in that** the annular slot (14) can be produced or is produced in the sealing ring (11) by rotation of the cutting ring (12) on a surface (15), which faces the cutting ring (12), of the sealing ring (11) or vice versa and by cutting into said surface (15) by means of the cutting ring (12).

6. Device (1) according to one of Claims 1 to 5, **characterized in that** the cutting ring (12) and the sealing ring (11), in particular if the drive shaft (6) is coupled to a drive (9), are pressed against each other under the action of a force oriented transversely or at right angles with respect to a or the surface (15), which faces the cutting ring (12), of the sealing ring (11), and/or **in that** the sealing ring (11) is held under axial prestress with the aid of the cutting ring (12) at least prior to an initial commissioning of the device (1).

7. Device (1) according to one of the preceding claims, **characterized in that** the sealing ring (11) is composed of a flexible and/or elastic material and/or of a foam material, in particular of PE foam, preferably of a closed-pore PE foam, and/or **in that** the cutting ring (12) is composed of a metal or an alloy thereof and/or has an in particular rectilinear or toothed cutting edge (16) facing the sealing ring (11).

8. Device (1) according to one of the preceding claims, **characterized in that** the device (1) has a, preferably cup-shaped, sealing ring receptacle (18) in which the sealing ring (11) is positioned for rotation therewith, in particular wherein a diameter of the sealing ring receptacle (18) is larger than a diameter of the cutting ring (12).

9. Device (1) according to one of the preceding claims, **characterized in that** a distance between the cutting ring (12) and a base area (20) of a or the sealing ring receptacle (18), said base area being oriented transversely or at right angles with respect to the axis of rotation (R) of the tool (5), is smaller than a height or axial dimension of the sealing ring (11).

10. Device (1) according to one of the preceding claims, **characterized in that** the drive shaft (6) is coupleable to a drive (9) for the tool (5) and is coupled thereto in the use position, and/or **in that** the device (1) comprises a drive (9) to which the drive shaft (6) is coupleable or is coupled.

11. Method for sealing a device (1) for grinding and/or milling grinding product, in particular such a device according to one of Claims 1 to 10, **characterized in that** a sealing ring (11) of the device (1) is cut into by means of a cutting ring (12) of the device (1) in order to produce an annular slot (14) in the sealing ring (11), after which the cutting ring (12) is positioned in the annular slot (14) in order to produce the seal (10) .

12. Method according to Claim 11, **characterized in that** rotation of a drive shaft (6) of the device (1) produces a relative rotational movement between the sealing ring (11) and the cutting ring (12) and at the same time a force oriented transversely or at right angles to a surface (15), which faces the cutting ring (12), of the sealing ring (11) is applied to the sealing ring (11) and/or to the cutting ring (12), as a result of which the cutting ring (12) cuts into the sealing ring (11), in the process produces the annular slot (14) and is then positioned in the annular slot (14).

13. Method according to Claim 12, **characterized in that** the sealing ring (11) is held in a prestressed manner by means of the cutting ring (12) in order to provide the force, and/or **in that** the force is produced by a connection of a drive shaft (6) of a tool (5) of the device (1) to a drive (9) .

## Revendications

1. Dispositif (1) de hachage ou de broyage de matière à broyer comprenant un réservoir (2) destiné à contenir la matière à broyer et comprenant un outil (5) assemblé à un arbre d'entraînement (6) et pouvant tourner dans le réservoir (2) autour d'un axe de rotation (R), dans lequel l'arbre d'entraînement (6) est mené à l'extérieur du réservoir (2) à travers une ouverture de passage (7) dans un fond (8) ou une paroi du réservoir (2), et dans lequel le dispositif (1) présente un joint d'étanchéité (10), avec lequel l'ouverture de passage (7) est rendue étanche, **caractérisé en ce que** le joint d'étanchéité (10) comprend un anneau d'étanchéité (11) qui entoure l'arbre d'entraînement (6) et une bague de coupe (12) qui entoure l'arbre d'entraînement (6), dans lequel l'anneau d'étanchéité (11) comporte une fente de forme annulaire (14) réalisée par incision dans l'anneau d'étanchéité (11) avec la bague de coupe (12), fente à l'intérieur de laquelle la bague de coupe (12) est positionnée au moins après une première mise en service du dispositif (1).

2. Dispositif (1) selon la revendication 1, **caractérisé en ce qu'**un mouvement de rotation relatif entre l'anneau d'étanchéité (11) et la bague de coupe (12) peut être produit par une rotation de l'arbre d'entraînement (6) et/ou **en ce que** la bague de coupe (12) présente un revêtement destiné à réduire le frottement.

3. Dispositif (1) selon la revendication 1 ou 2, **caractérisé en ce que** la bague de coupe (12) est assemblée de façon calée en rotation à l'outil (5) et/ou à l'arbre d'entraînement (6), et **en ce que** l'anneau d'étanchéité (11) est disposé de façon calée en rotation sur le réservoir (2), et/ou **en ce que** la bague de coupe (12) est assemblée à l'outil (5) et/ou à l'arbre d'entraînement (6) de façon étanche le long d'une ligne d'assemblage fermée (13) qui entoure l'axe de rotation (R), ou **en ce que** l'anneau d'étanchéité (11) est assemblé de façon calée en rotation à l'outil (5) et/ou à l'arbre d'entraînement (6), et **en ce que** la bague de coupe (12) est disposée de façon immobile sur le réservoir (2), dans lequel l'anneau d'étanchéité (11) est assemblé à l'outil (5) et/ou à l'arbre d'entraînement (6) de façon étanche le long d'une ligne d'assemblage fermée (13) qui entoure l'axe de rotation (R).

4. Dispositif (1) selon l'une quelconque des revendications 1 à 3, **caractérisé en ce qu'**un diamètre de la bague de coupe (12) est plus petit qu'un diamètre extérieur de l'anneau d'étanchéité (11) et est plus grand qu'un diamètre intérieur de l'anneau d'étanchéité (11) ou est plus grand qu'un diamètre extérieur de l'arbre d'entraînement (6).

5. Dispositif (1) selon l'une quelconque des revendications 1 à 4, **caractérisé en ce que** la fente de forme annulaire (14) dans l'anneau d'étanchéité (11) peut être ou est produite par un tournage de la bague de coupe (12) sur une surface (15) de l'anneau d'étanchéité (11) tournée vers la bague de coupe (12) ou inversement ou par une incision dans cette surface (15) au moyen de la bague de coupe (12).

6. Dispositif (1) selon l'une quelconque des revendications 1 à 5, **caractérisé en ce que** la bague de coupe (12) et l'anneau d'étanchéité (11), en particulier lorsque l'arbre d'entraînement (6) est couplé à un entraînement (9), sont pressés l'un contre l'autre sous l'action d'une force orientée transversalement ou perpendiculairement par rapport à une ou à la surface (15) de l'anneau d'étanchéité tournée vers la bague de coupe (12), et/ou **en ce que** l'anneau d'étanchéité (11) est maintenu sous une précontrainte axiale à l'aide de la bague de coupe (12) au moins avant une première mise en service du dispositif (1).

7. Dispositif (1) selon l'une quelconque des revendications précédentes, **caractérisé en ce que** l'anneau d'étanchéité (11) est constitué d'un matériau souple et/ou élastique et/ou d'une mousse, en particulier d'une mousse de PE, de préférence d'une mousse de PE à pores fermés, et/ou **en ce que** la bague de coupe (12) se compose d'un métal ou d'un alliage de celui-ci et/ou présente une arête de coupe (16), en particulier droite ou dentée, tournée vers l'anneau d'étanchéité (11).

8. Dispositif (1) selon l'une quelconque des revendications précédentes, **caractérisé en ce que** le dispositif (1) présente un logement d'anneau d'étanchéité (18), de préférence en forme de godet, dans lequel l'anneau d'étanchéité (11) est positionné de façon calée en rotation, en particulier dans lequel un diamètre du logement d'anneau d'étanchéité (18) est plus grand qu'un diamètre de la bague de coupe (12).

9. Dispositif (1) selon l'une quelconque des revendications précédentes, **caractérisé en ce qu'**une distance entre la bague de coupe (12) et une face de base (20) d'un ou du logement d'anneau d'étanchéité (18), orientée transversalement ou perpendiculairement à l'axe de rotation (R) de l'outil (5), est plus petite qu'une hauteur ou qu'une dimension axiale de l'anneau d'étanchéité (11).

10. Dispositif (1) selon l'une quelconque des revendications précédentes, **caractérisé en ce que** l'arbre d'entraînement (6) peut être couplé à un entraînement (9) pour l'outil (5) et y est couplé en position d'utilisation, et/ou **en ce que** le dispositif (1) comprend un entraînement (9) auquel l'arbre d'entraînement (6) peut être ou est couplé.

11. Procédé pour assurer l'étanchéité d'un dispositif (1) de hachage ou de broyage de matière à broyer, en particulier d'un dispositif selon l'une quelconque des revendications 1 à 10, **caractérisé en ce que** l'on incise un anneau d'étanchéité (11) du dispositif (1) pour produire une fente de forme annulaire (14) dans l'anneau d'étanchéité (11) au moyen d'une bague de coupe (12) du dispositif (1), et on positionne ensuite la bague de coupe (12) dans la fente de forme annulaire (14) pour la fabrication du joint d'étanchéité (10).

12. Procédé selon la revendication 11, **caractérisé en ce qu'**une rotation d'un arbre d'entraînement (6) du dispositif (1) produit un mouvement de rotation relatif entre l'anneau d'étanchéité (11) et la bague de coupe (12) et on applique en même temps à l'anneau d'étanchéité (11) et/ou à la bague de coupe (12) une force orientée transversalement ou perpendiculairement à une surface (15) de l'anneau d'étanchéité (11) tournée vers la bague de coupe (12), la bague de coupe (12) formant ainsi une incision dans l'anneau d'étanchéité (11), produisant en l'occurrence la fente de forme annulaire (14) et étant ensuite positionnée dans la fente de forme annulaire (14).

13. Procédé selon la revendication 12, **caractérisé en ce que** l'on maintient l'anneau d'étanchéité (11) sous précontrainte au moyen de la bague de coupe (12) pour la génération de la force, et/ou **en ce que** l'on produit la force par un assemblage d'un arbre d'entraînement (6) d'un outil (5) du dispositif (1) avec un entraînement (9).
